# EUROPEAN PATENT APPLICATION

(11) **EP 2 407 238 A1**
(43) Date of publication of application: **18.01.2012**
(21) Application number: 10750626.3
(22) Date of filing: 26.01.2010
(51) Int. Cl.: B01J 23/63, B01D 53/94, B01J 23/58, B01J 35/04, B01J 35/10, B01J 37/08, F01N 3/10

(54) **EXHAUST GAS PURIFYING CATALYST, EXHAUST GAS PURIFYING APPARATUS USING SAME, AND METHOD FOR PURIFYING EXHAUST GAS**

(30) Priority: 09.03.2009 JP 2009055260
(71) Applicant: Daiichi Kigenso Kagaku Kogyo Co., Ltd., Osaka-shi Osaka 559-0025 (JP); N.E. Chemcat Corporation, Tokyo 105-6124 (JP)
(72) Inventor: KOHARA Akira, Osaka-shi Osaka 559-0025 (JP); HIRASAWA Yoshiro, Numazu-shi Shizuoka 410-0314 (JP); YAMADA Takashi, Numazu-shi Shizuoka 410-0314 (JP)
(74) Representative: Müller-Boré & Partner Patentanwälte
(86) International application number: PCT/JP2010/050954
(87) International publication number: WO 2010/103870

(57) **Abstract**

An exhaust gas purification catalyst, which is suitable as a Three Way Catalyst for efficiently purifying carbon monoxide (CO), hydrocarbons (HC), and nitrogen oxides (NOₓ) in exhaust gas discharged from a gasoline automobile, an exhaust gas purification apparatus using the same and an exhaust gas purification method.

It is provided by an exhaust gas purification catalyst, wherein catalyst components for purifying hydrocarbons (HC), carbon monoxide (CO) and nitrogen oxides (NOₓ) contained in exhaust gas are coated onto a honeycomb type structure as a catalyst composition layer, **characterized in that** the catalyst components comprise an activated metal (A), a heat resistant inorganic oxide (B) and a cerium-zirconium composite oxide (c) containing a pyrochlore phase in a crystal structure, in the same catalyst composition layer, and the activated metal (A) is a palladium and a rhodium and does not contain a platinum.

## Description

### BACKGROUND OF THE INVENTION

### FIELD OF THE INVENTION

The present invention relates to an exhaust gas purification catalyst, an exhaust gas purification apparatus using the same and an exhaust gas purification method, and in more detail, the present invention relates to an exhaust gas purification catalyst, which is suitable as a Three Way Catalyst for efficiently purifying carbon monoxide (CO), hydrocarbons (HC) and nitrogen oxides (NOₓ) contained in exhaust gas discharged from a gasoline automobile, an exhaust gas purification apparatus using the same and an exhaust gas purification method.

### DESCRIPTION OF THE PRIOR ART

Exhaust gas discharged from an internal combustion engine of an automobile or the like, or a combustion engine such as a boiler, contains harmful substances such as hydrocarbons (HC), carbon monoxide (CO), nitrogen oxides (NOₓ), and various exhaust gas purification technologies for purifying these have been proposed. As one of these, there is an exhaust gas purification technology for purifying harmful components in exhaust gas, by installment of a catalyst in an exhaust gas passage.
In a catalyst apparatus for purifying exhaust gas discharged from an internal combustion engine of an automobile or the like, various catalysts have been used depending on objects thereof. As a major catalyst component thereof, there is a platinum-group metal, and usually it is supported onto a refractory inorganic oxide with large surface area such as activated alumina, in a highly dispersed state (refer to Patent Literature 1).

As for the platinum-group metal, which is the catalyst component, platinum (Pt), palladium (Pd) and rhodium (Rh) have been known, which have been widely used as the exhaust gas purification catalyst in an internal combustion engine such as an automobile. In many cases, in the above-described Three Way Catalyst (TWC: Three Way Catalyst), a catalytically activated species superior in oxidation activity, such as Pt and Pd, and Rh, which is superior in purification activity of NOₓ, are used in combination. In recent years, regulations on harmful substances, in particular NOₓ, contained in exhaust gas, have been increasingly tightened. Therefore, it is necessary to efficiently use Rh, which is superior in purification activity of NOₓ, however, because output of Rh is low and Rh price is expensive, market price thereof has been rising. Therefore, it is desired to reduce use amount of Rh, as a catalytically activated species, in view of resource protection or a cost aspect.
In order to reduce use amount of Rh, it is studied to arrange a catalyst composition layer using Rh at the surface side, separately from a catalyst composition layer using Pt and Pd, so as Rh is arranged at a position easy to contact with exhaust gas (refer to Patent Literature 8). However, configuration of a plurality of layers in this way results in increasing production cost of the exhaust gas purification catalyst.
It is considered that Pt, Pd and Rh are contained in one catalyst composition layer, however, combined use of a catalyst active species exerting oxidation activity, such as Pt, Pd and a catalyst active species exerting reducing activity, such as Rh, may provide the case where one activity inhibits another activity, and thus there was the case where sufficient purification performance cannot be obtained.

In addition, in order to enhance further purification performance in the exhaust gas purification catalyst, various co-catalyst components other than the platinum-group metal are added. As such co-catalyst components, an oxygen storage component, (OSC: Oxygen Storage Component), an alkaline earth metal, zirconium oxide, zeolite and the like are known.
Among them, the OSC is one which occludes and discharges oxygen in exhaust gas, and cerium oxide is known as an example. Cerium oxide occludes oxygen as CeO₂ when oxygen concentration is high in exhaust gas, and discharges oxygen as Ce₂O₃ when oxygen concentration is low. Oxygen discharged is active oxygen to promote purification of HC and CO by being utilized in oxidation action by Pt or Pd. In addition, the OSC also acts in buffering the change of oxygen concentration in exhaust gas, by occlusion and discharging of oxygen. This action enhances purification performance of exhaust gas in the TWC.
The TWC is one performing oxidation and reduction by one catalyst, and has a range of exhaust gas components suitable for purification, in view of designing. This range depends on air/fuel ratio in many cases. Such a range is called a window, in many cases, exhaust gas after combustion at the vicinity of theoretical air/fuel ratio is set in the window region. By buffering the change of oxygen concentration in exhaust gas, this window region can be maintained for a long period of time, and purification of exhaust gas is performed efficiently. It is said to give influence on purification performance of NOₓ, in particular, by Rh.

As such OSC, pure cerium oxide may be enough, however, it is used as a composite oxide with zirconium (refer to Patent Literature 2). The cerium-zirconium composite oxide has high heat resistance and also high oxygen storing speed. It is because the cerium-zirconium composite oxide has a stable crystal structure, does not inhibit the action of cerium oxide, which is a major OSC component, and thus acts as the OSC as far as the inside part of a particle.
In addition, it is desirable generally that such OSC has a high specific surface area value. That it is the high specific surface area value means large active surface and is said that high activity as the OSC is also exhibited.

In purification of NOₓ by Rh, a steam reforming reaction is promoted as follows by the Rh component.

HC+H₂O -----→ COx+H₂ (1)

H₂+NOₓ -----→ N₂+H₂O (2)

And, use of a zirconium oxide together with the Rh component promotes the steam reforming reaction (refer to Patent Literature 3).

As the co-catalyst component, other than this, an alkaline earth metal such as a Ba component is known (refer to Patent Literature 4). The Ba component temporarily occludes NOₓ contained in exhaust gas as Ba(NO₃)₂, and reduces and purifies NOₓ occluded to N₂ by a reducing component contained in exhaust gas.
In general, when fuel to be supplied to an engine is scarce, quantity of air is rich and combustion temperature is high, NOₓ is generated in a large quantity. The Ba component temporarily absorbs NOₓ thus generated.
NOₓ absorbed by the Ba component is discharged from the Ba component, when NOₓ concentration becomes low and CO concentration becomes high in exhaust gas. This is caused by a reaction of the above Ba(NO₃)₂ with CO to be converted to BaCO₃, and is also said chemical equilibrium. NOₓ discharged from the Ba component reacts with the reducing component at the surface of the Rh component as described above, and thus is reduced and purified.

As such a co-catalyst component, two or more can be used in combination, for example, the TWC using the Ba component and cerium oxide is known (refer to Patent Literature 5). However, purification performance may be lowered depending on combination of catalyst materials, for example, it has been reported that presence of the Rh component and the Ba component in the same composition reduces purification performance of NOₓ (refer to Patent Literature 6). The reason for this is not certain, however, it is considered to be caused by interference of purification action of NOₓ in the Rh component, because the alkaline earth metal component has occlusion action of NOₓ, and by making an alloy of the Ba component and the Rh component.
In this way, because there are various combinations of the catalyst components, and the catalyst components mutually take complicated reaction routes by correlated action, combinations of the catalyst components for exerting best purification performance have been searched by investigating these comprehensively.

It should be noted that the exhaust gas purification catalyst is enough to be arrange only one in an exhaust gas passage, however, there may be the case where two or more are arranged. Because catalyst surface area is increased by this, purification performance of exhaust gas enhances. However, as described above, because there is the window region in designing in the exhaust gas purification catalyst such as the TWC, there may be the case where desired purification performance cannot be obtained only by simple arrangement of a plurality of catalysts. It is because components of the exhaust gas, which passed through a catalyst of the former stage, has composition different from that of exhaust gas just after discharged from an engine, and a catalyst of the latter stage is necessary to be designed so as to have the composition of exhaust gas thus changed, as the window region.
Therefore, the present applicants have proposed a method for obtaining desired purification performance by using a catalyst system where two catalysts having a platinum-group metal and a specified oxygen storage component (OSC) as catalyst components are arranged in an exhaust gas passage (refer to Patent Literature 7).

In general, because the exhaust gas purification catalyst enhances purification activity of exhaust gas, when temperature is raised to a certain degree, in the case where an engine is started from a completely cooled state, sufficient purification performance cannot be exerted, in some cases, till the exhaust gas purification catalyst is warmed. In the case of purifying exhaust gas from an automobile by such catalyst technology, such performance has been required that is capable of purifying harmful components in exhaust gas in higher efficiency as compared with conventional technology, in a wider temperature region covering from start-up of an engine in a cooled state to a state where the exhaust gas is warmed and catalyst temperature is raised.
In addition, in recent years, regulation values for, in particular, NOₓ, have been increasingly tightened, and needs for the exhaust gas purification catalyst superior in purification performance of NOₓ has been increasing in the TWC too.

### PRIOR ART LITERATURE

### PATENT LITERATURE

Patent Literature 1: JP-A-5-237390
Patent Literature 2: JP-B-06-75675
Patent Literature 3: JP-A1-2000/027508, page 14
Patent Literature 4: JP-A-2007-319768, paragraph 0003
Patent Literature 5: JP-A-03-106446
Patent Literature 6: JP-A-2002-326033, paragraph 0013
Patent Literature 7: JP-A-2008-68225
Patent Literature 8: JP-A-2006-159159, claim 3

### SUMMARY OF THE INVENTION

In view of the above problems, it is an obj ect of the present invention to provide a catalyst exerting excellent purification performance for exhaust gas discharged from an internal combustion engine of an automobile, an exhaust gas purification apparatus using the same and an exhaust gas purification method.

The present inventors have intensively studied a way to attain the above-described object and as a result, confirmed that excellent purification performance can be exhibited for CO, HC and NOₓ in exhaust gas, from low temperature to high temperature, by coating a catalyst composition layer having an activated metal (A), a heat resistant inorganic oxide (B) and a cerium-zirconium composite oxide (c) containing a pyrochlore phase in a crystal structure, onto a honeycomb type structure, as catalyst components, and by making palladium and rhodium of the activated metal (A) contained in the same catalyst composition layer without containing platinum, and have thus completed the present invention.

That is, according to a first aspect of the present invention, there is provided an exhaust gas purification catalyst, wherein catalyst components for purifying hydrocarbons (HC), carbon monoxide (CO) and nitrogen oxides (NOₓ) contained in exhaust gas are coated onto a honeycomb type structure as a catalyst composition layer, characterized in that: the catalyst components have an activated metal (A), a heat resistant inorganic oxide (B) and a cerium-zirconium composite oxide (c) containing a pyrochlore phase in a crystal structure, in the same catalyst composition layer, and the activated metal (A) is palladium and rhodium, without containing platinum.

In addition, according to a second aspect of the present invention, there is provided the exhaust gas purification catalyst in the first aspect, characterized in that the above catalyst composition layer is only one layer.
In addition, according to a third aspect of the present invention, there is provided the exhaust gas purification catalyst in the first aspect, characterized by further having, as a catalyst component, a cerium-containing oxide (C') having a cubic crystal and/or a tetragonal crystal as a major crystal structure.
In addition, according to a fourth aspect of the present invention, there is provided the exhaust gas purification catalyst in the first aspect, characterized in that as for the cerium-zirconium composite oxide (c), peak waveform at the vicinity of (2θ) 29° nearly overlaps, when measured with an X-ray diffraction apparatus (XRD) after a durability test at 1050°C and 1150°C.
Further, according to a fifth aspect of the present invention, there is provided the exhaust gas purification catalyst in the first aspect, characterized in that content of the activated metal (A) is from 0.01 to 10 g/L in both of palladium and rhodium, per unit volume of the honeycomb type structure.

In addition, according to a sixth aspect of the present invention, there is provided the exhaust gas purification catalyst in the first aspect, characterized in that the heat resistant inorganic oxide (B) is at least one kind selected from alumina, zirconia, silica, titania, silica-alumina, or zeolite. In addition, according to a seventh aspect of the present invention, there is provided the exhaust gas purification catalyst in the sixth aspect, characterized in that the heat resistant inorganic oxide (B) has an inorganic base material having zirconia as a major component, and an inorganic base material having alumina as a main component. In addition, according to an eighth aspect of the present invention, there is provided the exhaust gas purification catalyst in the first aspect, characterized in that the cerium-zirconium composite oxide (c) is obtained by crushing an ingot, which is formed by melting a raw material mixture under heating at temperature of equal to or higher than melting point thereof, and then by cool ing, and when an average particle size is from 1 to 100 µm, specific surface area thereof is equal to or smaller than 20 m²/g. In addition, according to a ninth aspect of the present invention, there is provided the exhaust gas purification catalyst in the first or eighth aspect, characterized in that cerium and zirconium of the cerium-zirconium composite oxide (c) are contained in a ratio of CeO₂/ZrO₂=1/9 to 9/1, based on molar ratio as converted to an oxide.
In addition, according to a tenth aspect of the present invention, there is provided the exhaust gas purification catalyst in any one the first, eighth or ninth aspect, characterized in that content of the cerium-zirconium composite oxide (c) is from 3 to 200 g/L, per unit volume of the honeycomb type structure.

In addition, according to a eleventh aspect of the present invention, there is provided the exhaust gas purification catalyst in the third aspect, characterized in that the cerium-containing oxide (C') is obtained by firing a raw material mixture under heating at temperature of below melting point thereof, and then by cooling and crushing, and when an average particle size is from 1 to 100 µm, specific surface area value thereof is from 10 to 300 m²/g.
Further, according to a twelfth aspect of the present invention, there is provided the exhaust gas purification catalyst in the third or eleventh aspect, characterized in that content of the cerium-containing oxide (C') is from 5 to 200 g/L, per unit volume of the honeycomb type structure.

On the other hand, according to a thirteenth aspect of the present invention, there is provided the exhaust gas purification catalyst in the first aspect, characterized in that a barium component is further contained in the catalyst composition, and content thereof is from 1 to 30 g/L as converted to an oxide.
In addition, according to a fourteenth aspect of the present invention, there is provided the exhaust gas purification catalyst in the first aspect, characterized in that the honeycomb type structure is a flow-through-type carrier with a cell density of from 10 to 1500 cell/inch².

On the other hand, according to a fifteenth aspect of the present invention, there is provided an exhaust gas purification apparatus arranged with the catalyst relevant to any one of the first to the fourteenth aspects, in a passage of exhaust gas discharged from an internal combustion engine.
In addition, according to a sixteenth aspect of the present invention, there is provided the exhaust gas purification apparatus in the fifteenth aspect, characterized in that the internal combustion engine is a gasoline engine.
Further, according to a seventeenth aspect of the present invention, there is provided an exhaust gas purification method, characterized in that hydrocarbons (HC), carbon monoxide (CO) and nitrogen oxides (NOₓ) contained in exhaust gas are purified by contacting exhaust gas discharged from an internal combustion engine to the exhaust gas purification apparatus relevant to the fifteenth or sixteenth aspect.

The exhaust gas purification catalyst of the present invention is capable of purifying HC, CO and NOₓ, which are harmful components in exhaust gas, under environment where temperature of exhaust gas varies from low temperature to high temperature, and thus exerting excellent purification performance, in particular, when used as the TWC.
In addition, by arranging this exhaust gas purification catalyst in a passage of exhaust gas discharged from an internal combustion engine, an exhaust gas purification apparatus can be produced easily, which is capable of purifying NOₓ in exhaust gas from an automobile efficiently. In addition, it is capable of purifying HC, CO and NOₓ, which are harmful components in exhaust gas, under environment where oxygen concentration and HC concentration vary.

### BRIEF DESCRIPTION OF THE DRAWINGS

[Figure 1] Fig. 1 is a chart showing measurement result (A) of structural change of a cerium-zirconium composite oxide (c) before and after a durability test under heating, using an X-ray diffraction apparatus (XRD); and measurement result (B) in the case of a cerium-zirconium composite oxide (c').
[Figure 2] Fig. 2 is a chart showing change with time of oxygen quantity discharged from cerium-zirconium-type composite oxides (C) and (C').
[Figure 3] Fig. 3 is a graph of measurement of quantity of NMHC, THC, NOₓ and CO (1/10 quantity) components in a "Cold Bag" of an exhaust gas purification apparatus.
[Figure 4] Fig. 4 is a graph of measurement of quantity of NMHC, THC, NOₓ and CO (1/100 quantity) components in a "Hot Bag" of an exhaust gas purification apparatus.
[Figure 5] Fig. 5 is a chart showing measurement result (A) of structural change of a cerium-zirconium composite oxide (c), different from Fig. 1, before and after a durability test under heating, using an X-ray diffraction apparatus (XRD); and measurement result (B) in the case of a cerium-zirconium composite oxide (c'), different from Fig. 1.
[Figure 6] Fig. 6 is a chart showing measurement result (A) of structural change of a cerium-zirconium composite oxide (c), different from Fig. 1 and 5, before and after a durability test under heating, using an X-ray diffraction apparatus (XRD); and measurement result (B) in the case of a cerium-zirconium composite oxide (c'), different from Fig. 1, and 5.

### DETAILED DESCRIPTION OF THE INVENTION

Explanation will be given below in detail on the exhaust gas purification catalyst, the exhaust gas purification apparatus using the same, and the exhaust gas purification method of the present invention, mainly on the TWC among the exhaust gas purification catalysts for an automobile, with reference to drawings.

### 1. The exhaust gas purification catalyst for an automobile

The exhaust gas purification catalyst of the present invention is designed so as to coat a honeycomb type structure with a catalyst composition layer consisting of an activated metal (A), a heat resistant inorganic oxide (B) and a cerium-zirconium composite oxide (c) containing a pyrochlore phase in a crystal structure, as a catalyst component, and make palladium and rhodium of this activated metal (A) to the same layer, and not to contain platinum. In addition, this catalyst composition layer can contain the cerium-containing oxide (C').

### [The catalytically activated metal (A)]

In the present invention, as the catalytically activated metal (hereafter may be referred to also as an activated metal specie or a metal catalyst component), rhodium and palladium are used. Because it is desirable that such a catalytically activated metal is stable against heat or atmosphere, and also has high activity, it is desirable that it is supported onto the heat resistant inorganic oxide, which becomes a base material.
Rhodium is a component which enhances purification performance of NOₓ in the TWC application. Content of rhodium component is preferably 0.01 to 10 g/L, and more preferably 0.1 to 5 g/L, per unit volume of the honeycomb type structure. The too low content of the rhodium component cannot provide sufficient purification performance of NOₓ, while the too much content may not provide enhancement of purification performance comparable to use amount, in some cases. The rhodium component has effect to promote purification of NOₓ by hydrogen generated by a steam reforming reaction or a water gas shift reaction.

Action of the steam reforming reaction in NOₓ purification is as represented by the following chemical formulas (1) and (2).

HC+H₂O -----→ COx+H₂ (1)

H₂+NOₓ -----→ N₂+H₂O (2)

Because rhodium of an activated metal promotes the steam reforming reaction by a combined use with zirconium (refer WO2000/027508 page 14), this action can be utilized to reduction of NOₓ. In the present invention too, it is considered that mechanism similar to this is generated at least partially.

The water gas shift reaction is a reaction to generate hydrogen as in the following reaction formula (3), by utilization of CO in exhaust gas, and the reaction is accelerated at a relatively low temperature (refer to JP-A-2007-196146, paragraph 0008 or the like).

CO+H₂O -----→ CO₂+H₂ (3)

It is preferable that content of the palladium component to be used in the present invention is from 0.01 to 10 g/L, and more preferably from 0.5 to 10 g/L, based on unit volume of the honeycomb type structure. The content less than 0.01 g/L may not provide sufficient purification performance of CO and HC, in some cases, while the content more than 10 g/L may not provide enhancement of performance comparable to use amount, in some cases.
In the present invention, it has been confirmed that purification performance of NOₓ is enhanced more by using a palladium, as the catalytically activated metal, as compared with using platinum. Although reason therefor is not certain, it is estimated to be caused by tendency to maintain higher catalytic activity by palladium than platinum, in gasoline with advanced sulfur content reduction.

Metal catalyst components to be used in the present invention are rhodium and palladium, and may include, in addition to these, a transition metal, a rare earth metal or the like. As the transition metal, iron, nickel, cobalt, zirconium, copper, or the like, and as the rare earth metal, a noble metal such as gold and silver may be included, in addition to lanthanum, praseodymium and neodymium, and one or more kinds can be selected as appropriate from these.

### [The heat resistant inorganic oxide (B)]

In the present invention, it is desirable that the activated metal (A) is supported onto the heat resistant inorganic oxide (hereafter may be referred to also as an inorganic base material, or simply as a base material).
As the base material, a porous inorganic material having high heat resistance and large specific surface area, is preferable and, for example, activated alumina such as γ-alumina, θ-alumina; zirconia, cerium-zirconium composite oxide, ceria, titanium oxide, silica, various kinds of zeolites can be used. As such a porous inorganic base material, base materials having further enhanced heat resistance may be used, by adding a rare earth group such as lanthanum, cerium, barium, praseodymium or strontium, or an alkaline earth metal.

And, as the base material of the rhodium component, it is preferable to include a zirconia component, in view of promoting the steam reforming reaction, and although a composite oxide of zirconia and alumina, other than pure zirconia, can be used, it is preferable to use zirconia as a main component in the case of such a composite oxide too. In addition, as a base material of the palladium component, it is preferable to be one or more kinds selected from γ-Al₂O₃, or lanthanum-added γ-Al₂O₃. Lanthanum-added γ-alumina is superior in heat resistance, and in the case where a platinum-group metal such as palladium is supported thereon, it is possible to maintain high catalytic activity even at high temperature (refer to JP-A-2004-290827).
As γ-alumina, one having a specific surface area (measured by the BET method; the same hereafter) of equal to or higher than 30 m²/g, and further equal to or higher than 90 m²/g is preferable. The specific surface area value of γ-alumina of equal to or higher than 30 m²/g is capable of stabilizing the noble metal in a highly dispersed state. Because the cerium-zirconium composite oxide (c) has excellent resistance at high temperature, combined use of this with lanthanum-added γ-alumina is capable of obtaining a catalyst composition having excellent stability at high temperature.

### [The cerium-zirconium composite oxide (c)]

The cerium-zirconium composite oxide, that is, Ce·Zr(C), contains the pyrochlore phase in the crystal structure. As such Ce·Zr(C), it is desirable to be the cerium-zirconium composite oxide (c) is obtained by crushing an ingot, which is melted a raw material mixture under heating at temperature of equal to or higher than melting point thereof, and then is formed by cooling. The cerium-zirconium-type composite oxide melted under heating at temperature of equal to or higher than melting point in this way, is obtained as follows.

The element materials of a raw material mixture to be used can be any one as long as at least one of them is melted, when the element materials are heated in a production step of a composite oxide shown below. The cerium raw material and the zirconium raw material are preferably oxides. Melting point of cerium oxide is 2200°C, and melting point of zirconium oxide is 2720 °C. Thus, the oxide of the element material has high melting point, however, in the case where cerium oxide and/or zirconium oxide are used as the element materials, there may be the case where a melting state can be obtained even at lower heating temperature than melting point of the oxide, because of influence of melting point depression. Small quantity of a nitrate salt, a carbonate salt, a sulfate salt, a chloride salt, a bromide salt of cerium or zirconium may be formulated into these raw materials. Formulation of such a raw material compound other than the oxide may promote melting in the production step, in some cases.
In addition, in order to lower the melting point, a third component such as trace quantity of flux is formulated, in some cases. Melting point of the raw material mixture where these element materials are mixed, differs depending on molar ratio of ceria/zirconia, and specifically, it is about 2600°C for the case of CeO₂/ZrO₂ (molar ratio) = 1/9, about 2200°C for the case of the molar ratio=5/5, and about 2000°C for the case of the molar ratio = 9/1.
In the case where materials other than the cerium element material and the zirconium element material are used in combination as the third component, alkali metal, alkaline earth metal, rare earth metal, noble metal components and the like may be added, as long as it is in a range not to impair characteristics of the OSC material to be obtained. In more specifically, potassium, rubidium, cesium, magnesium, calcium, strontium, barium, antimony, hafnium, tantalum, rhenium, bismuth, praseodymium, neodymium, samarium, gadolinium, holmium, thulium, ytterbium, germanium, selenium, cadmium, indium, scandium, titanium, niobium, chromium, iron, silver, rhodium, platinum and the like are included. In addition, such a third component may be included by being derived from impurities in the cerium element material and the zirconium element material. However, it is natural that in the case where such a third component is a hazardousness regulation subject, it is desirable to reduce quantity thereof, or remove it.

The above cerium raw material and the zirconium raw material are mixed in predetermined ratio, and then charged into a melting apparatus. The melting method is not especially limited, as long as it is a method for melting at least one kind of the raw material mixture, and an arc-type, a high frequency thermal plasma-system and the like are exemplified. Among others, a general electric melting method, that is, a melting method using an arc-type electric furnace may preferably be utilized.
In the case of the melting method using the arc-type electric furnace, predetermined quantity of coke is added, as an electrically conductive material, to promote initial energization, if necessary, to the mixed cerium raw material and the zirconium raw material, although it depends on mixing ratio of the cerium raw material and the zirconium raw material. Subsequently, for example, it is heated under condition of a secondary voltage of from 70 to 100 V, an average load electric power of from 80 to 100 kW, and a temperature of equal to or higher than 2400°C. It is desirable that the raw material mixture of the cerium-zirconium-type composite oxide is melted under heating for from 0.5 to 3 hours. By maintaining the raw material for equal to or longer than 0.5 hour, after reaching a molten state, uniform melting can be attained. Heating temperature can be any level as long as it is equal to or higher than 2000°C, however, it is preferable to be equal to or higher than melting point of the raw materials, in particular, from 2600 to 2800°C. Holding time in a molten state is preferably set for from 1 to 2 hours. It should be noted that atmosphere in melting is not especially limited, and in addition to air atmosphere, inert gas atmosphere such as in nitrogen, argon, helium may be employed. In addition, pressure is not especially limited, and any of a normal pressure state, a pressurized state and a reduced pressure state can be employed, however, usually an atmospheric pressure state may be employed.
After completion of the melting, by covering the electric furnace with a carbon lid, and by gradually cooling for from 20 to 30 hours, an ingot is obtained. A cooling method for the molten substance is not especially limited, however, usually, the ingot is taken out from the melting apparatus to be subjected to standing to cool in air, so as to attain equal to or lower than 100°C, and preferably equal to or lower than 50°C.
In this way, the ingot of the cerium-zirconium-type composite oxide can be obtained, where the cerium raw material and the zirconium raw material became uniform. Content ratio of cerium and zirconium of the cerium-zirconium-type composite oxide obtained in this way is not especially limited, however, [CeO₂/ZrO₂] is 1/9 to 9/1, and further preferably 2/3 to 3/2, based on molar ratio. Such a composition ratio is capable of providing excellent oxygen storage and discharge performance, and heat resistance.

The ingot after melting is then crushed. A crushing method for the ingot is not especially limited, however, it is desirable to be crushed so that particle size of the cerium-zirconium-type composite oxide is equal to or smaller than 3 mm. The ingot can be crushed with a crusher such as a jaw crusher or a roll crusher. In consideration of handling at the latter steps, it is preferable to crush and classify the ingot, so as to become powder with a size of equal to or smaller than 1 mm.
It should be noted that the resulting powder is charged into the electric furnace or the like, if necessary, after separation of impurities and the like by magnetic separation, to remove a suboxide in the melting step or the strain inside a crystal by super-cooling, by an oxidative firing. Condition of the oxidative firing is not especially limited as long as it is condition enabling oxidation of the ingot or powder, however, usually the firing can be attained at from 100°C to 1000°C, and preferably at from 600°C to 800°C. In addition, firing time is not especially limited, however, from 1 to 5 hours, and preferably from 1 to 3 hours can be employed.
Powder obtained by the above method can be subjected to further fine crushing, corresponding to applications. The fine crushing is not especially limited, however, it can be attained with a crusher such as a planet mill, a ball mill, or a jet mill for from 5 to 30 minutes. It is preferable that the cerium-zirconium-type composite oxide has an average particle size of from 0.3 to 2.0 µm, in particular, from 0.5 to 1.5 µm, by this fine crushing. Although detailed reason is not clear, it is considered that increased surface area of the composite oxide by fine crushing enables to discharge a large quantity of oxygen at a low temperature region. It should be noted that the average particle size can be analyzed with a laser diffraction scattering apparatus or the like.
In addition, decrease in average particle size within this range tends to decrease crystallite size, as shown in Table 2. Reason is not certain for large variation of the crystallite size of [Ce·Zr (C)] by degree of crushing, however, it is considered to be derived from formation of a single large coarse crystal of [Ce·Zr (C)], in the melting step of a raw material mixture at super high temperature. It is considered that the more finely fragmentation by crushing of such a large coarse crystal to make smaller particle size, decreases also the size of the crystallite the smaller.
In this way, powder of the cerium-zirconium composite oxide containing cerium and zirconium in a ratio of 1/9 to 9/1, based on (CeO₂/ZrO₂) can be obtained. It is preferable that this powder has, when an average particle size is from 1 to 100 µm, a specific surface area thereof of equal to or smaller than 20m²/g, preferably equal to or smaller than 10 m²/g and more preferably equal to or smaller than 5 m²/g.

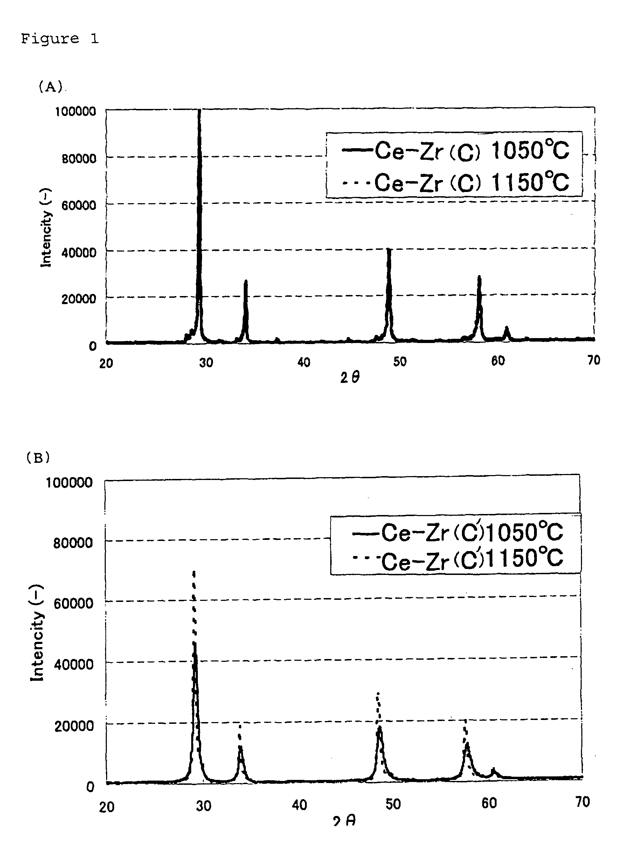

This cerium-zirconium-type composite oxide was subjected to a durability test under heating to measure structure change before and after the test, with an X-ray diffraction apparatus (XRD), providing results as shown in (A) of Fig. 1, 5 and 6. Because waveforms of the main peak (it corresponds to Zr_{0.5}Ce_{0.5}O₂) after firing in high temperature atmosphere at 1050°C and 1150°C, overlapped similarly, it is clear to have sufficient thermal stability, and at the same time, to have a large crystal structure, because the main peak is extremely sharp.
It is preferable that such Ce·Zr(C), in the exhaust gas purification catalyst of the present invention, has a content thereof of preferably from 3 to 200 g/L, and more preferably from 5 to 100 g/L, per unit volume of the honeycomb type structure. The too much quantity of Ce·Zr(C) reduces cross-sectional area of through holes of the honeycomb type structure, resulting in increase in back pressure and may decrease engine performance, while the too less quantity may not exert performance of Ce·Zr(C).

### [The cerium-containing oxide (C')]

In the TWC, reducing components such as CO and HC are reacted with oxygen in exhaust gas and removed by oxidation, and NOₓ is purified by reduction. It should be noted that oxygen concentration in exhaust gas discharged from an automobile varies every second. In addition, purification of NOₓ is promoted under atmosphere of exhaust gas combusted under equal to or lower than theoretical air/fuel ratio. It is because components to reduce NOₓ in exhaust gas increase.
However, in an automotive engine, fuel may be combusted under lean air/fuel ratio of equal to or larger than theoretical air/fuel ratio. In recent years, enhancement of fuel economy has been desired in care for environment, and this tendency has been increasing more and more. Under such environment, promotion of purification of NOₓ is difficult. Accordingly, with a main object of buffering such variation of oxygen concentration in exhaust gas, purification of NOₓ is promoted by formulating the OSC into a composition of the exhaust gas purification catalyst, and increasing a concentration of reducing components by absorbing oxygen when oxygen concentration in exhaust gas is high. In addition, oxygen absorbed into the OSC supplies oxygen into exhaust gas when oxygen concentration in exhaust gas is low, so as to oxidize CO and HC.
In this way, usually as the OSC, Ce·Zr(C'), which was fired at temperature equal to or lower than melt temperature of a raw material mixture, has been used, and it has been known that a crystal structure thereof is a cubic crystal and/or a tetragonal crystal (JP-A-2002-336703, paragraph 0012 and paragraph 0029).

In the exhaust gas purification catalyst of the present invention, in addition to the cerium-zirconium composite oxide (c), use of the cerium-containing oxide (C'), as the OSC, is preferable. As this cerium-containing oxide (C'), the cerium-zirconium composite oxide (c') is preferable.
The Ce·Zr(C') is superior in heat resistance at high temperature, and as described in JP-B-6-75675, it is obtained by mixing a cerium salt and a zirconium salt as raw materials, and firing at a temperature of equal to or lower than 1000°C, and 1300°C at most, under condition where melt substances do not generate. In addition, each raw material may be used not by mixing but by a co-precipitation method or the like as a raw material mixture.
Using Ce·Zr(C') obtained in this way, the durability test under heating was carried out to measure structure change before and after the test, with the X-ray diffraction apparatus (XRD), and obtained the result as shown in (B) of Fig. 1, 5 and 6. In Ce·Zr(C') obtained by not melting under heating at high temperature of equal to or higher than melting point of the raw material mixture in this way, because a main peak (it corresponds to Zr_{0.5}Ce_{0.5}O₂) to be observed after firing in high temperature air of 1050°C and 1150°C, became sharp gradually, it was found that change of a physical state in durability at high temperature was significant. In addition, thermal stability was obviously inferior, as compared with the above cerium-zirconium composite oxide (c).
Specific surface area of this Ce·Zr(C') is from 10 to 300 m²/g, preferably from 20 to 200 m²/g and more preferably from 30 to 100 m²/g. One having the specific surface area of below 10 m²/g may not exhibit sufficient activity, while one having the specific surface area of over 300 m²/g has insufficient heat stability, and thus not preferable. In addition, even when average particle size is decreased within this range, crystallite size does not change so much, as shown in Table 2. Reason is not certain for not so much change of the crystallite size of [Ce·Zr (C')] by degree of crushing, however, it is considered to be derived from no growth of the crystal to large size, because [Ce·Zr (C')] is obtained by firing at temperature lower than melting point of a raw material mixture, and such a crystal is considered not to be fragmented finely even by crushing.
It is preferable that use amount of Ce·Zr(C') is from 5 to 200 g/L, and preferably from 10 to 100 g/L, per unit volume of the honeycomb type structure. The too much quantity of Ce·Zr(C') reduces cross-sectional area of through holes of the honeycomb type structure, resulting in increase in back pressure and may decrease engine performance, while the too less quantity may not exert performance of ce·Zr(c').

### [The honeycomb type structure]

The exhaust gas purification catalyst of the present invention is used as a honeycomb structure-type catalyst where the above each catalyst component is coated onto the surface of the honeycomb type structure.
Shape of the honeycomb type structure is not especially limited, and can be selected from known honeycomb type structures (one-piece structure-type carrier). As a material of such one-piece structure-type carrier, a metal and ceramics are included. In the case of a metal, one made of stainless steel is general, and as shape thereof, a honeycomb-like one is general. A material of the ceramics includes cordierite, mullite, alumina, magnesia, spinel, silicon carbide, or the like, however, one made of cordierite is preferable in view of good formability in preparation of the honeycomb and superiority in heat resistance or mechanical strength.
In the TWC application, a flow-through-type carrier made of cordierite is preferable from the view points that stability can be enhanced by increasing easiness of production, strength as a structure, suppression (maintaining good discharge of exhaust gas) of pressure loss accompanying with installment of a structural catalyst, coating quantity of catalyst components or the like.

External shape of this one-piece structure-type carrier is arbitrary, and can be selected as appropriate in response to a structure of an exhaust system to which a catalyst is applied, such as circular cylinder-type having round circle or ellipse cross-section, quadratic prism-type, hexagonal column-type or the like. Hole number of the opening part of the one-piece structure-type carrier is also determined suitably in consideration of kind of exhaust gas to be treated, gas flow quantity, pressure loss, or removal efficiency or the like, however, in the exhaust gas purification apparatus for an automobile, it is desirable to be about from 10 to 1500 pieces per 1 inch².
In a carrier of honeycomb shape such as the flow-through-type carrier, structural characteristics thereof are represented by cell density. In the present invention, it is preferable to be the flow-through-type carrier having a cell density of from 10 to 1500 cell/inch², and in particular, 300 to 900 cell/inch². The cell density of equal to or higher than 10 cell/inch² is capable of securing contact area between exhaust gas and a catalyst required for purification, and obtaining purification performance of exhaust gas, along with excellent structural strength, and the cell density of equal to or lower than 1500 cell/inch² is capable of securing contact area between exhaust gas and a catalyst sufficiently, without large pressure loss of exhaust gas of an internal combustion engine, and without impairing performance of the internal combustion engine. In particular, in the TWC for a gasoline engine, the flow-through-type carrier having the cell density of from 300 to 900 cell/inch² is preferable in view of suppression of pressure loss.

In the present invention, one kind of the catalyst composition layer for purifying hydrocarbons (HC), carbon monoxide (CO) and nitrogen oxides (NOₓ) contained in exhaust gas is coated onto the honeycomb type structure.

The catalyst composition layer of the exhaust gas purification catalyst of the present invention comprises the activated metal (A), the heat resistant inorganic oxide (B) and the cerium-zirconium composite oxide (c) containing the pyrochlore phase in the crystal structure, wherein the activated metal (A) is palladium and rhodium, and the catalyst composition layer is composed of the catalyst composition without containing platinum. That is, the Pd component, the Rh component as the activated metals, the heat resistant inorganic oxide as a dispersing agent or a base material thereof, and Ce·Zr(C) as the OSC component are contained.

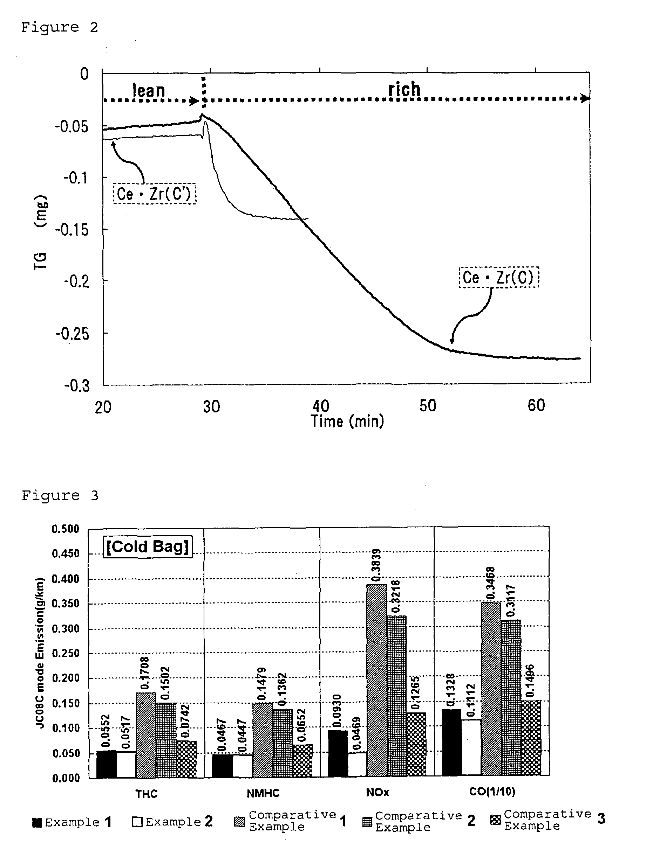

In addition, reason for enhancing purification performance of Noₓ by using Ce·Zr (C), as compared with using only Ce·Zr (C'), is not certain, however, it is considered that difference of OSC performance of both may have influence.
When OSC performance of Ce·Zr (C') and Ce·Zr (C) is examined, results as shown in Fig. 2 were obtained. The Vertical axis represents oxygen quantity discharged from a sample, and the X axis represents passage of time. It should be noted that lean atmosphere is air, and rich atmosphere is gas containing 5% by mol concentration of hydrogen and the balance of helium, and hydrogen concentration is maintained at constant during measurement. Here, measurement was performed using Thermo plus TG 8120, manufactured by RIGAKU Corp. as a differential thermal balance, under conditions of lean atmosphere: air, rich atmosphere: gas containing 5% H₂/He balance, temperature: 600°C, sample weight: 10 mg, and sample shape: powder.
As is understood from Fig. 2, in switching from lean atmosphere to rich atmosphere, Ce·Zr (C') discharges oxygen rapidly, while Ce-Zr (C) discharges oxygen mildly. In addition, Ce·Zr (C') discharges oxygen quickly and completely after switching to rich atmosphere, while Ce·Zr (C) continues to discharge oxygen for a long period of time, and discharge quantity of oxygen is also much.
It is considered that, in exhaust gas purification catalyst of the present invention using Ce·Zr (C), as an essential component, purification performance of NOₓ was enhanced, by influence of difference of such OSC performance.

Content of the rhodium component in the catalyst composition layer is from 0.01 to 10 g/L, and preferably 0.1 to 5 g/L as converted to metal, per unit volume of the honeycomb type structure. In addition, content of Ce·Zr (C) is from 3 to 200 g/L, and preferably 5 to 100 g/L, based on unit volume of the honeycomb type structure.

In the catalyst composition layer of the exhaust gas purification catalyst of the present invention, it is preferable to contain the cerium-containing oxide (C') having a cubic crystal and/or a tetragonal crystal as the major crystal structure, in addition to the activated metal (A), the heat resistant inorganic oxide (B) and Ce·Zr (C).
Because the Pd component of catalyst metal specie exerting oxidation activity is cheaper compared to Rh and Pt, it can be used in a relatively large quantity. Therefore, the catalyst of the present invention can be produced in lower cost than a catalyst using Pt.
However, Pd is liable to decrease catalytic activity by poisoning by a sulfur component (JP-A-2005-021793, paragraph 0005). Therefore, it is desirable that use amount of Pd is increased or it is used in an internal combustion engine using fuel with low sulfur content. Reduction of sulfur content of fuel has been progressing in both of gasoline and light oil, however, in particular, gasoline. Therefore, it is preferable that the exhaust gas purification catalyst of the present invention is used as the TWC in purification of exhaust gas from a gasoline engine.

In addition, in the catalyst composition layer of the exhaust gas purification catalyst of the present invention, the Pd component and the Rh component are used. Presence of a metal, having oxidizing activity, such as the Pd component, and the Rh component having reducing activity, in the same layer may setoff mutual activity, in some cases (JP-A-11-169712, paragraph 0011). In addition, Pd is a metal having worry of making an alloy with Rh, or sintering, and may decrease activity by sintering (JP-A-2005-021793, paragraph 0005; JP-A-2002-326033, paragraph 0004). Therefore, it is under investigation that the Pd component and the Rh component are not present in the same catalyst composition layer.
However, surprisingly, in the present invention, even when the Pd component and the Rh component are present in the same catalyst composition layer, superior exhaust gas purification performance can be exerted. In this way, by forming the single catalyst composition layer, a high performance catalyst for exhaust gas purification can be obtained, therefore production cost of the catalyst can be reduced.

In addition, in the catalyst composition layer of the exhaust gas purification catalyst to be used in the present invention, it is preferable that Ce·Zr (C') is used. Reason for enhancing purification performance of Noₓ by containing Ce·Zr (C') in the catalyst composition layer, as compared with the case of only Ce·Zr (C), is not certain, however, it is considered that difference of OSC performance of both, described above, may have influence. That is, it is considered that in switching from lean atmosphere to rich atmosphere, Ce·Zr (C') discharges oxygen rapidly, and discharges smaller quantity of oxygen than Ce·Zr (C).

In addition, it is desirable that the Ba component, which is an alkaline earth metal component, is contained in the catalyst composition layer. The alkaline earth metal component is an NOₓ occlusion component, however, it has been known that presence of the Rh component and the alkaline earth metal component in the same composition reduces purification performance of NOₓ (JP-A-2002-326033, paragraph 0013). Reason for reducing purification performance of Noₓ in this way is not certain, however, it is considered to be caused by interference of purification action of NOₓ by the Rh component, because the alkaline earth metal component has occlusion action of NOₓ. Therefore a configuration of a plurality of layers has been designed conventionally, so that the alkaline earth metal component and the Rh component are contained in different catalyst composition layers.
However, surprisingly, in the present invention, even when the Ba component and the Rh component are present in the same catalyst composition layer, superior exhaust gas purification performance can be exerted.
Content of the barium component is from 0.1 to 50 g/L, and preferably from 1 to 30 g/L as converted to the oxide, per unit volume of the honeycomb type structure. The barium component exerts effect even in a small quantity, however, in the case where use amount thereof increases to the same mole number as Pd, effect comparable to the use amount may not be desired in some cases.

### [Preparation of a catalyst]

A catalyst composition to be used in the exhaust gas purification catalyst of the present invention is not especially limited by a production method, and it is prepared using a known method. As one example thereof, as raw materials of the Pd component, and the Rh component of the catalyst metal components, the salt solutions such as a nitrate salt, a sulfate salt, a carbonate salt, an acetate salt thereof are prepared. These salt solutions are mixed into the heat resistant inorganic oxide, which is a base material. This mixture is dried, and a solvent is removed to obtain the heat resistant inorganic oxide base material supported the catalyst metal components. Here, after drying this mixture, a firing step may be added. It is desirable that the fired substance after passing the firing step is converted to powder by a method of crushing or the like.
In the case where a noble metal is specifically supported onto γ-alumina, zirconium oxide or the like, an aqueous solution of a metal salt such as dinitrodiammine palladium, palladium nitrate, palladium chloride, rhodium (III) chloride, rhodium (III) nitrate or the like can be mixed with γ-alumina, rhodium oxide or the like, and dried and fired.

Next, by mixing a medium such as water into each of the heat resistant inorganic oxide base material, which is supported by a catalyst metal component, forming noble metal slurry, adding the cerium-zirconium composite oxide (c), and if necessary, a medium such as water, the cerium-containing oxide (C'), the Ba component and other catalyst component raw materials, and via a crush-mixing step, catalyst composition slurry is obtained.
The Ba component is present as barium oxide in the honeycomb structure-type catalyst in many cases, however, in producing catalyst composition slurry, it may be added in a form of other barium salt such as barium sulfate, barium carbonate or barium nitrate, or it may be a composite oxide containing barium oxide, barium sulfate, barium carbonate or barium nitrate. Among these, use of barium sulfate decreases viscosity of the catalyst composition slurry, and may enhance coating property in wash coat. The honeycomb structure-type carrier has shape where a plurality of through holes is assembled, and thus makes it difficult for slurry with high viscosity to coat the catalyst composition slurry inside the through holes. The fact that use of barium sulfate decrease viscosity of the slurry means that the addition of not only the Ba component but also a large quantity of catalyst components is made easy, and the production of honeycomb structure-type catalyst with high activity is made easy.
As the above "other catalyst components", the catalyst components themselves may be used, however, catalyst component raw materials, which will become catalyst components in the firing step of the later stage, may be used. In addition, in mixing the catalyst components with a medium such as water, a dispersing agent, a pH regulator or the like may be formulated. In addition, other than the catalyst components or co-catalyst components having specific function, inorganic oxides for a binder and the like may be mixed to make coating onto the honeycomb type structure firm.

The honeycomb structure-type catalyst to be used in the present invention can be produced by coating the catalyst composition slurry obtained by the above method at one time onto the honeycomb structure-type carrier, drying and firing.
A coating method onto the honeycomb structure-type carrier is not especially limited, however, a wash coat method is preferable. Drying temperature is preferably from 100 to 300°C, and more preferably from 100 to 200°C. In addition, firing temperature is preferably from 300 to 1200°C, and from 400 to 800°C, or from 400 to 600°C is particularly preferable. As for a heating means, heating can be performed by a known heating means such as an electric furnace, a gas furnace.
In the present invention, only the catalyst composition layer of the present invention may be coated directly onto the surface of the honeycomb type structure in this way, however, a coating layer may be provided separately at exhaust gas flow side at the upper side of the catalyst composition layer, or at the honeycomb structure-type carrier side at the lower side of the catalyst composition layer. As the coating layer provided separately, there is included a base coat layer for enhancing adhesion between the catalyst composition layer and the honeycomb type structure; or a poisoning prevention layer of the catalyst composition layer; or the like.

### 2. The exhaust gas purification apparatus

The exhaust gas purification apparatus of the present invention is one where the above exhaust gas purification catalyst is arranged in a flow of exhaust gas discharged from a gasoline engine for an automobile. The exhaust gas purification catalyst of the present invention contains the Pd component, as oxidation-type activated specie, or the Rh component, as reduction-type activated specie, therefore it is used preferably as the TWC for purifying HC, CO and NOₓ contained in exhaust gas.

As described above, in the catalyst composition layer of the exhaust gas purification catalyst of the present invention, the Pt component having oxidation function is used. It is considered that generally because the Pt component can maintain activity even when poisoned by sulfur components as compared with the Pd component, it can purify exhaust gas generating derived from fuel with high sulfur content.

However, in exhaust gas not containing sulfur components, the Pd component exerts excellent activity for purification of CO, HC and Noₓ, as compared with the Pt component, and superiority of this Pd component is significant at the vicinity of theoretical air/fuel ratio (1989, published by Catalysis Society of Japan, Catalyst, vol.31, No.8, p566-567). In recent years, decrease in sulfur-content in fuel has been progressed, and thus the present invention intends to exert superior effect by using the catalyst of the present invention in the exhaust gas purification apparatus of an internal combustion engine using gasoline distributed as sulfur-free fuel.

A gasoline engine for an automobile is operated in a state where fuel concentration of air-fuel mixture is repeated in a lean state and a rich state. The present exhaust gas purification catalyst can exert significant action effect as the exhaust gas purification apparatus, by containing the cerium-zirconium composite oxide (c) containing the pyrochlore phase in the crystal structure of the catalyst composition layer. In addition, by containing cerium-containing oxide (C') having a cubic crystal and/or a tetragonal crystal as a major crystal structure, more superior exhaust gas purification performance can be exerted.
In the exhaust gas purification apparatus of the present invention, use of only one exhaust gas purification catalyst of the present invention may be enough. In the case where the two or more catalysts are used, the present exhaust gas purification catalyst may be arranged at any of the upstream side and the down-stream side of the exhaust gas passage.
In the exhaust gas purification catalyst for an automobile in recent years, use of two or more catalysts is general, however, in the present invention, it is not necessary to investigate a new catalyst layout, and it is applicable easily not only to a conventional automobile but also to an automobile to be commercialized in the future. In addition, at the later stage of the upstream side catalyst and the down-stream side catalyst, it can be used by changing a design as appropriate, such as combining catalysts having similar function, or completely different catalysts or the like.

### 3. The exhaust gas purification method

The exhaust gas purification method of the present invention is a method for purifying hydrocarbons (HC), carbon monoxide (CO) and nitrogen oxides (NOₓ), by using the above exhaust gas purification apparatus, and contacting the exhaust gas discharged from an internal combustion engine.

The exhaust gas purification method of the present invention is one where HC, CO and NOₓ are purified even by the above one exhaust gas purification catalyst, and in the case where one or more exhaust gas purification catalysts other than the exhaust gas purification catalyst of the present invention are used in combination, similar action effect can be obtained by using the exhaust gas purification catalyst of the present invention at any of the upstream side and the downstream side.
The present applicants have proposed a catalyst system, which exerts excellent exhaust gas purification performance by arranging a catalyst containing the cerium-zirconium composite oxide (c) having the pyrochlore phase in the crystal structure, and arranging the TWC containing the known OSC at the upstream side (the Patent Literature 7). The present invention is not limited to such a use method, and is one which can also be used as a catalyst at the upstream side.
Catalytic function can be expected even when temperature of exhaust gas is low, for example, room temperature, or high such as 700°C. Typically, usually, it is used at a temperature of from 700 to 800°C, and it is preferable to be used at a temperature of from 100 to 600°C. Although a certain degree of difference arises in catalytic activity depending on exhaust gas temperature, catalytic function is exerted in such a wide temperature range.
The present invention is not limited to the TWC as described above, and is also applicable to a purification method for NOₓ in exhaust gas of a diesel engine where the HC is used as a reducing agent, namely HC-SCR (Selective Catalytic Reduction) or the like. The HC-SCR is one for using the HC as a reducing agent for purifying NOₓ in exhaust gas from lean combustion, and the HC to be used on this occasion is one for increasing HC concentration in exhaust gas by temporarily decreasing air/fuel ratio of air mixed with fuel, which is supplied to a combustion room, or for supplying by directly spraying fuel into exhaust gas.

It is preferable that the present invention is applied to a gasoline engine, however, it may be applied also to an internal combustion engine for an automobile using fossil fuel such as diesel and LPG, or bio-diesel fuel, or a boiler, a gas turbine or the like.

### EXAMPLES

Characteristics of the present invention will be made further clearly below with reference to Examples and Comparative Examples. It should be noted that the present invention should not be limited to embodiment of these Examples. It should be noted that the cerium-zirconium composite oxide (c), (C'), which are catalyst components, and catalyst composition slurry containing them, were prepared by the methods shown below.

### [The cerium-zirconium composite oxide (c)]

By using high purity zirconium oxide (a purity of 99.9%) as a raw material of Zr, and high purity cerium oxide (a purity of 99.9%) as a raw material of Ce, powder of the cerium-zirconium-type composite oxide of the present invention was produced according to procedure shown next.
Firstly, in order to prepare 10 kg of the powder, the high purity zirconium oxide (4.2 kg) and the high purity cerium oxide (5.8 kg) were sampled and mixed, and subjected to melting at equal to or higher than 2250°C, using an arc-type electric furnace under condition of a secondary voltage of 85 V, an average load power of 99.5 kW, a welding time of 2 hours and applying a total electric energy of 182 kWh.
It should be noted that to promote initial stage energization, 500 g of coke was used. After completion of the melting, the electric furnace was covered with a carbon lid, and an ingot was obtained by gradual cooling for 24 hours in air atmosphere. The resulting ingot was crushed with a jaw crusher or a roll crusher, down to a size of 3 mm, and then powder with a size of equal to or smaller than 1 mm was collected using a sieve to obtain the present cerium-zirconium-type composite oxide.
Next, in order to remove a suboxide in the melting step or a strain inside crystal due to super-cooling, it was subjected to firing at 800°C for 3 hours in air atmosphere, using the electric furnace, and crushing with a planet mill for 10 minutes to obtain powder, Ce·Zr(C), with an average particle size of 1.3 µm. The average particle size was analyzed with a laser diffraction scattering apparatus (LS230, manufactured by COULTER Co., Ltd.). By this analysis with XRD, it was confirmed that a pyrochlore phase is contained singly in the crystal structure. In addition, specific surface area was 1.3 m²/g.

### [The cerium-zirconium composite oxide (c')]

Commercially available cerium nitrate (a purity of 99.0%) and zirconium oxynitrate (a purity of 99.0%) were dissolved in ion-exchanged water to prepare an aqueous solution of 20% by weight as converted to CeO₂ and 25% by weight as converted to ZrO₂.
Next, each of the nitrate solutions required to prepare a composite oxide composed of 58% by weight of CeO₂ and 42% by weight of ZrO₂ was mixed, and 5% ammonia water was added to make pH=10.2 finally, and cerium hydroxide and zirconium hydroxide were co-precipitated.
Then, after performing suction filtration, it was washed with pure water. This was fired at 500°C for 2 hours to obtain the cerium-zirconium-type composite oxide. Subsequently, via similar steps as in the production of the above Ce·Zr(C), a non-melt-type cerium-zirconium-type composite oxide, Ce·Zr(C'), with a particle size of equal to or smaller than 2.0 µm, was obtained. This was confirmed with XRD to contain a tetragonal structure singly in the crystal structure. In addition, specific surface area was 74 m²/g.

### [Rh slurry]

By preparing the following raw materials, Rh slurry was produced. Mixing of slurry was performed by crush mixing with a ball mill.
=Raw materials of Rh slurry=
* An aqueous solution of rhodium nitrate (metal conversion: 7 wt%)
* ZrO₂ (specific surface area value: 60 m²/g)
* Water
Rh was supported by impregnating an aqueous solution of rhodium nitrate onto ZrO₂ by an impregnation method. After drying this, it was fired at 300°C for 1 hour to obtain Rh supported ZrO₂ (hereafter may be referred to as Rh/[ZrO₂]).

### [Pd slurry]

By preparing the following raw materials, Pd slurry was produced. Mixing of slurry was performed by crush mixing with a ball mill.
=Raw materials of Pd slurry=
* An aqueous solution of paradium nitrate (metal conversion: 20 wt%)
* γ-alumina (specific surface area value: 220 m²/g)
* Water
Pd was supported by impregnating an aqueous solution of a Pd salt onto γ-alumina. After drying this, it was fired at 300°C for 1 hour to obtain Pd supported γ-alumina (hereafter may be referred to as Pd/[γ-alumina]).

### [Pt slurry]

Pt slurry was obtained by preparing the following raw materials. Mixing of slurry was performed by crush mixing with a ball mill.
=Raw materials of Pt slurry=
* An aqueous solution of platinum diammine nitrite (metal conversion: 20 wt%)
* γ-alumina (specific surface area value: 220 m²/g)
* Water
Pt was supported by impregnating an aqueous solution of a Pt salt onto γ-alumina. After drying this, it was fired at 300°C for 1 hour to obtain Pt supported γ-alumina (hereafter may be referred to as Pt/[γ-alumina]).

### [Catalyst composition slurry-1]: Pd, Rh, Ce·Zr(C), Ce·Zr(C')

By preparing each noble metal slurry obtained in this way and the following raw materials such as the above Ce·Zr(C), catalyst composition slurry-1 was produced. Mixing of slurry was performed by crush mixing with a ball mill.
=Raw materials of catalyst composition slurry-1=
* Rh/[ZrO₂]
* Pd/[γ-alumina]
* Ce-Zr(C) (average particle size: 1.3 µm, specific surface area: 1.3 m²/g)
* Ce·Zr(C') (average particle size: 2.0 µm, specific surface area: 76 m²/g)
* Barium hydroxide (Ba(OH)₂)
* γ-alumina (specific surface area value: 220 m²/g)
* Water
These raw materials containing γ-alumina as a binder were crush-mixed using a ball mill to obtain catalyst composition slurry-1.

### [Catalyst composition slurry-2]: Pd, Rh, Ce·Zr(C)

Catalyst composition slurry-2 was obtained similarly to the catalyst composition slurry-1, except that Ce·Zr(C') was changed to Ce·Zr(C). Mixing of slurry was performed by crush mixing with a ball mill.

### [Catalyst composition slurry-3]: Pt, Rh, Ce·Zr(C), Ce·Zr(C')

Catalyst composition slurry-3 was obtained similarly to the catalyst composition slurry-1, except that Pd/[γ-alumina] was changed to Pt/[γ-alumina].

### [Catalyst composition slurry-4]: Pt, Rh, Ce·Zr(C)

Catalyst composition slurry-4 was obtained similarly to the catalyst composition slurry-2, except that Ce·Zr(C') was changed to Ce·Zr(C), and Pd/[γ-alumina] was changed to Pt/[γ-alumina].

### [Catalyst composition slurry-5]: Pd, Rh, Ce·Zr(C')

Catalyst composition slurry-5 was obtained similarly to the catalyst composition slurry-1, except that Ce·Zr(C) was changed to Ce·Zr(C').

### (Examples 1 and 2), (Comparative Examples 1, 2 and 3)

By laminating the above catalyst composition slurry-2 or catalyst composition slurry-1 onto the following honeycomb type structure by a wash coat method, and after drying and firing under the following condition, by heating under the following condition, honeycomb structure-type catalysts of the present invention (Examples 1 and 2) with enhanced durability were obtained.
In addition, similarly, by using the catalyst composition slurry-4, the catalyst composition slurry-3 or the catalyst composition slurry-5, honeycomb structure-type catalysts for comparison (Comparative Examples 1, 2 and 3) were obtained.
Layer configurations in each honeycomb structure-type catalyst, and compositions of each component are shown in Table 1. Numbers in parentheses in Table 1 represent quantity of component per unit volume [g/L] of each catalyst component, and quantities of the Pd component, the Rh component and the Pt component are metal converted values.

### =The honeycomb type structure=

* Material: made of cordierite
* Size: 118.4 ϕ × 50 [mm] (volume: 550 cc)
* Cell density: 900 cell /inch²
* Thickness of cell wall: 2.5 mil

### =Drying and firing conditions=

* Drying temperature: 150°C
* Firing furnace: A gas furnace
* Firing temperature: 500°C
* Firing time: 2 hours

### =Catalyst aging conditions=

* Aging: Stoichio-fuel cut aging (an engine in the following "Measurement conditions" was used)
* Temperature: 950°C
* Aging time: 40 hours

**[Table 1]**

| | Composition of components |
|---|---|
| Example 1 | o Catalyst composition slurry-2 |
| | Pd(6.25)/[γ-alumina (75)], Rh(0.25)/[ZrO₂(70)], Ce/Zr(C)(30), γ-alumina (25), Ba(OH)₂(10) |
| Example 2 | o Catalyst composition slurry-1 |
| | Pd(6.25)/[γ-alumina (75)], Rh(0.25)/[ZrO₂(70)], Ce·Zr(C)(10), Ce·Zr(C')(20), γ-alumina (25), Ba(OH)₂ (10) |
| Comparative Example 1 | o Catalyst composition slurry-4 |
| | Pt(6.25)/[γ-alumina (75)], Rh(0.25)/[ZrO₂(70)], Ce·Zr(C)(30), γ-alumina (25), Ba(OH)₂ (10) |
| Comparative Example 2 | o Catalyst composition slurry-3 |
| | Pt(6.25)/[γ-alumina (75)], Rh(0.25)/[ZrO₂(70)], Ce·Zr(C)(10),Ce·Zr(C')(20), γ-alumina (25), Ba(OH)₂ (10) |
| Comparative Example 3 | o Catalyst composition slurry-5 |
| | Pd(6.25)/[γ-alumina (75)], Rh(0.25)/[ZrO₂(70)], Ce·Zr(C')(30), γ-alumina(25), Ba(OH)₂(10) |

Then, to compare purification performance of catalysts as for Example 1, Example 2, Comparative Example 1, Comparative Example 2 and Comparative Example 3, discharged quantities of NMHC (non-methane hydrocarbons), NOₓ, THC (total hydrocarbon) and CO (1/10 values of discharged quantities in [Cold Bag], 1/100 values of discharged quantities in [Hot Bag]), contained in exhaust gas after passing through each catalyst, were measured. Measurement conditions were in accordance with the following conditions.

### [Measurement conditions]

^{*} An engine for evaluation: NA2.4 L, a gasoline engine
^{*} Fuel: Commercially available regular gasoline (sulfur content: 10 ppm)
^{*} Measurement mode: JC08 mode, [hot phase], [cold phase]
^{*} Measurement apparatus of exhaust gas: MEXA9400, manufactured by HORIBA Ltd.

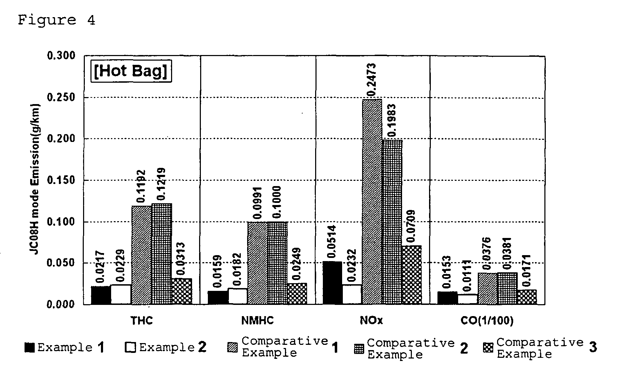

The JCO8 mode has contents nearer to practical running as compared with the conventional 10·15 mode, and similarly to the U.S. FTP mode, is a kind of a practical "transient mode", where acceleration and deceleration is also not constant, and is varied delicately. In addition, the test is performed in both of a state that an engine was warmed in advance (a hot phase), and a state that an engine is completely cold (a cold phase).
Among these, exhaust gas sampled in the cold phase is called "Cold Bag", and exhaust gas sampled in the hot phase is called "Hot Bag". "Cold Bag" and "Hot Bag" are adopted widely, in general, in evaluation of the exhaust gas purification catalyst apparatus, and also in the present invention, quantities of THC (total hydrocarbon) components, NMHC (non-methane hydrocarbons) components, NOₓ components and CO component in the "Cold Bag" and the "Hot Bag" were measured. NMHC is a general name of hydrocarbons (aliphatic saturated hydrocarbons, aliphatic unsaturated hydrocarbons, and aromatic hydrocarbons) other than methane, and is specified as an emission regulated substance in exhaust gas from an automobile, as a causative substance of a photochemical oxidant.
The results of [Cold Bag] obtained are shown in Fig. 3, and the results of [Hot Bag] obtained are shown in Fig. 4. In these Figures., numerical values of the vertical axis represent [g/km], showing discharged quantities per running distance.

### (Examples 3 and 4), (Comparative Examples 4 and 5)

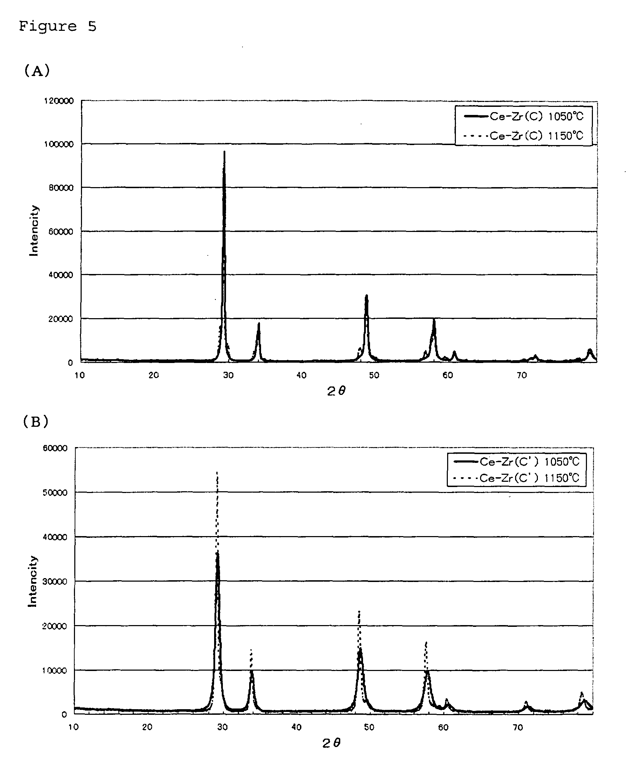

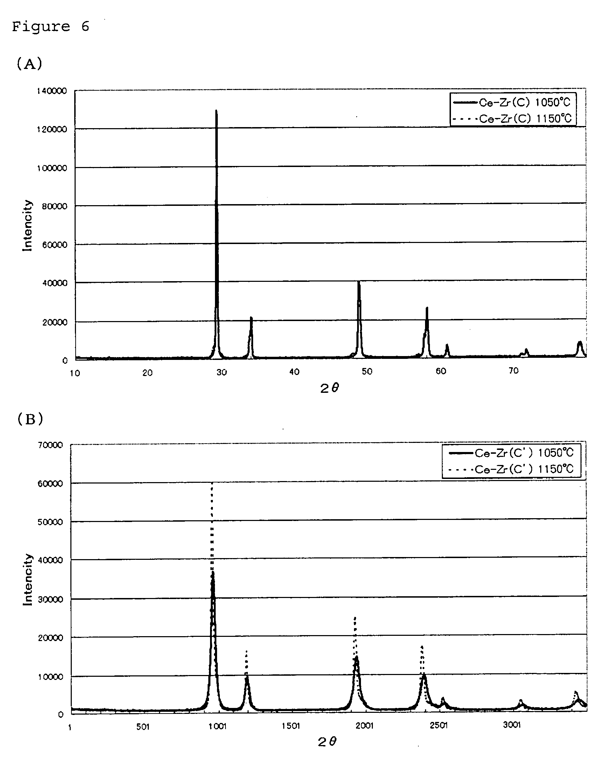

Ce·Zr (C) was prepared by the above procedure, crushed to an average particle size of 0.5 µm or 1.1 µm, and subjected to a durability test respectively at 1050°C and 1150°C to measure peak intensity on each sample, with an X-ray diffraction method (XRD), and crystallite size was introduced.
In the present measurement, "MXP21VAHF22 MDS-III, manufactured by Bruker AXS. K.K." was used. In addition, crystallite size was calculated using a Scherrer equation from a peak specific to cerium-zirconium composite oxide, appearing at the vicinity of (2θ) 29°. The XRD chart of Ce·Zr (C) with the average particle size of 0.5 µm was shown in Fig. 5(A), and the XRD chart of Ce·Zr (C) with the average particle size of 1.1 µm was shown in Fig. 6(A).

As is clear from Fig. 5(A) and Fig. 6(A), it is understood that Ce·Zr (C) has a stable and large crystal structure without showing big change of shape of the XRD chart before and after the durability test under heating. In addition, as is clear from Table 2, Ce·Zr (C) shows big change of crystallite size thereof by crushing. The reason is not clear, however, it is considered to be derived from formation of a single large coarse crystal of Ce·Zr (C), in the melting step at super high temperature, which makes fine fragmentation of such a large coarse crystal by crushing, and the smaller particle size decreases also the size of the crystallite the smaller.
Next, using this Ce·Zr (C), similarly as in Example 2, the above catalyst composition slurry-1 was prepared, and by lamination onto the honeycomb type structure using a wash coat method, and after drying and firing, by heating under the above condition, honeycomb structure-type catalysts of the present invention (Examples 3 and 4) were obtained.
After that, in order to compare purification performance of the catalysts, discharged quantities of NMHC (non-methane hydrocarbons), NOₓ THC (total hydrocarbon) and CO contained in exhaust gas after passing through each catalyst were measured. It was confirmed that similar tendency as in Example 2 is shown.

On the other hand, Ce·Zr (C') was prepared by the above procedure. The XRD chart of Ce·Zr (C') with the average particle size of 0.5 µm was shown in Fig. 5(B), and the XRD chart of Ce·Zr (C') with the average particle size of 1.1 µm was shown in Fig. 6(B), and sizes of each crystallite were summarized in Table 2.
In the case of crushing to an average particle size of 0.5 µm or 1.1 µm, shape of the XRD chart changed big before and after the durability test under heating, as show in Fig, 5(B) and Fig. 6(B). As is clear from Table 2, the crystallite size after the durability test under heating increased to nearly two times. It is understood that the crystallite size of Ce·Zr(C') does not change by crushing. The reason is considered to be derived from no growth of the crystal to large size, because Ce·Zr (C') was fired at temperature lower than melting point of a raw material mixture, and such a crystal is considered not to be fragmented finely even by crushing.
Next, using this Ce·Zr (C'), similarly as in Comparative Example 2, the above catalyst composition slurry-3 was prepared, and by lamination onto the honeycomb type structure using a wash coat method, and after drying and firing, by heating under the above condition, honeycomb structure-type catalysts for comparison (Comparative Examples 4 and 5) were obtained.
After that, in order to compare purification performance of the catalysts, discharged quantities of NMHC (non-methane hydrocarbons), NOₓ, THC (total hydrocarbon) and CO contained in exhaust gas after passing through each catalyst were measured. It was confirmed that similar tendency as in Comparative Example 2 is shown.

**[Table 2]**

| | Ave. particle size: 1.1 µm | | Ave. particle size: 0.5 µm | |
|---|---|---|---|---|
| | 1050°C | 1150°C | 1050°C | 1150°C |
| Ce·Zr (C) | 78.91 | 82.74 | 47.89 | 55.83 |
| Ce·Zr (C') | 13.33 | 28.63 | 13.46 | 30.89 |

### [Evaluation]

From the above results, it is understood that in Examples 1 to 4 having a layer configuration using a specific catalyst composition of the present invention, excellent purification performance for NMHC, THC, NOₓ and CO is exerted, irrespective of at high temperature and at low temperature.
In particular, as for the catalyst using Ce·Zr (C) and Ce·Zr (C') in combination, it is understood that purification performance thereof is superior for NOₓ whose discharge regulation has been strengthened as causative substances of air pollution inducing photochemical smog or acid rain. On the contrary, in Comparative Examples 1 to 5, because of using the catalyst compositions different from the present invention, desired purification performance is not obtained.

The exhaust gas purification catalyst of the present invention is effective as the Three Way Catalyst (TWC) for purifying hydrocarbons (HC), carbon monoxide (CO) and nitrogen oxides (NOₓ), and it is also applicable to a NOₓ purification method in exhaust gas of a diesel engine, where the HC is used as a reducing agent (HC-SCR: Selective Catalytic Reduction) or the like. It is preferable that the present invention is applied to a gasoline engine, however, it may be applied also to an internal combustion engine for an automobile using fossil fuel such as diesel and LPG, or bio-diesel fuel, or a boiler, a gas turbine or the like.

## Claims

1. An exhaust gas purification catalyst, wherein catalyst components for purifying hydrocarbons (HC), carbon monoxide (CO) and nitrogen oxides (NOₓ) contained in exhaust gas are coated onto a honeycomb type structure as a catalyst composition layer, **characterized in that**:
said catalyst components comprise an activated metal (A), a heat resistant inorganic oxide (B) and a cerium-zirconium composite oxide (c) containing a pyrochlore phase in a crystal structure, in the same catalyst composition layer, and the activated metal (A) is a palladium and a rhodium and does not contain a platinum.

2. The exhaust gas purification catalyst according to claim 1, **characterized in that** said catalyst composition layer is only one layer.

3. The exhaust gas purification catalyst according to claim 1, **characterized in that** the catalyst component further comprises a cerium-containing oxide (C') of a cubic crystal and/or a tetragonal crystal as a major crystal structure.

4. The exhaust gas purification catalyst according to claim 1, **characterized in that**, as for the cerium-zirconium composite oxide (c), peak waveform at the vicinity of (2θ) 29° nearly overlaps, when measured with an X-ray diffraction apparatus (XRD)after a durability test at 1050°C and 1150°C.

5. The exhaust gas purification catalyst according to claim 1, **characterized in that** content of the activated metal (A) is from 0.01 to 10 g/L in both of palladium and rhodium, per unit volume of the honeycomb type structure.

6. The exhaust gas purification catalyst according to claim 1, **characterized in that** the heat resistant inorganic oxide (B) is at least one kind selected from alumina, zirconia, silica, titania, silica-alumina, or zeolite.

7. The exhaust gas purification catalyst according to claim 6, **characterized in that** the heat resistant inorganic oxide (B) comprises an inorganic base material having zirconia as a major component, and an inorganic base material having alumina as a main component.

8. The exhaust gas purification catalyst according to claim 1, **characterized in that** the cerium-zirconium composite oxide (c) is obtained by crushing an ingot, which is formed by melting a raw material mixture under heating at temperature of equal to or higher than melting point thereof, and then by cooling, and when an average particle size is from 1 to 100 µm, specific surface area thereof is equal to or smaller than 20 m²/g.

9. The exhaust gas purification catalyst according to claim 1 or 8, **characterized in that** cerium and zirconium of the cerium-zirconium composite oxide (c) are contained in a ratio of CeO₂/ZrO₂=1/9 to 9/1, based on molar ratio as converted to an oxide.

10. The exhaust gas purification catalyst according to any one of claims 1, 8 or 9, **characterized in that** content of the cerium-zirconium composite oxide (c) is from 3 to 200 g/L, per unit volume of the honeycomb type structure.

11. The exhaust gas purification catalyst according to claim 3, **characterized in that** the cerium-containing oxide (C') is obtained by firing a raw material mixture under heating at temperature of below melting point thereof, and then by cooling and crushing, and when an average particle size is from 1 to 100 µm, specific surface area thereof is from 10 to 300 m²/g.

12. The exhaust gas purification catalyst according to claim 3 or 11, **characterized in that** content of the cerium-containing oxide (C') is from 5 to 200 g/L, per unit volume of the honeycomb type structure.

13. The exhaust gas purification catalyst according to claim 1, **characterized in that** a barium component is further contained in the catalyst composition, and content thereof is from 1 to 30 g/L as converted to an oxide.

14. The exhaust gas purification catalyst according to claim 1, **characterized in that** the honeycomb type structure is a flow-through-type carrier with a cell density of from 10 to 1500 cell/inch².

15. An exhaust gas purification apparatus comprised by arranging the catalyst according to any one of claims 1 to 14, in a passage of exhaust gas discharged from an internal combustion engine.

16. The exhaust gas purification apparatus according to claim 15, **characterized in that** the internal combustion engine is a gasoline engine.

17. An exhaust gas purification method, **characterized in that** hydrocarbons (HC), carbon monoxide (CO) and nitrogen oxides (NOₓ) contained in exhaust gas are purified by contacting exhaust gas discharged from an internal combustion engine to the exhaust gas purification apparatus according to claim 15 or 16.
